# EUROPEAN PATENT SPECIFICATION

(11) **EP 1 090 534 B1**
(45) Date of publication and mention of the grant of the patent: **30.07.2003**
(21) Application number: 99939791.2
(22) Date of filing: 03.06.1999
(51) Int. Cl.: H05B 3/82, A47J 27/21, F16J 13/12

(54) **LIQUID HEATING VESSELS**
GEFÄSSE ZUM ERHITZEN VON FLÜSSIGKEITEN
CUISEURS POUR LIQUIDES

(30) Priority: 03.06.1998 GB 9811936; 17.03.1999 WO PCT/GB99/00808
(43) Date of publication of application: 11.04.2001
(73) Proprietor: STRIX LIMITED, Ronaldsway, Isle of Man IM9 2RG (GB)
(72) Inventor: TAYLOR, John Crawshaw, Castletown, Isle of Man IM9 1HA (GB); MEEKS, Alan, Michael George, Basingstoke, Hampshire RG24 8XX (GB); HARDY, Stuart, Whitchurch, Shropshire SY13 1EP (GB)
(74) Representative: Leckey, David Herbert
(86) International application number: GB9901747
(87) International publication number: WO99063789

(56) References cited:
- EP-A- 0 285 839
- EP-A- 0 807 394
- GB-A- 2 291 324

## Description

The present invention relates to liquid heating vessels and in particular to means for mounting a planar heating element in an aperture provided in the base of the vessel.

Traditionally, liquid heating vessels such as kettles and hot water jugs have been provided with heaters which extend into the body of the vessel through an opening in the side wall of the vessel. Such heaters have typically been clamped in position in the opening by screws which pass through a control unit of the heater to engage with studs provided on the heater. Such an arrangement is described for example in Applicant's GB 2181598. It is becoming more common, however, to use planar heaters which are mounted to close an opening in the base of the vessel body, the heater thereby effectively forming a wall portion of the vessel base. Such arrangements are disclosed for example in, for example, Applicant's WO96/18331.

A number of arrangements for mounting such heaters have been proposed. For example in WO96/18331 a peripheral groove on the heater is deformed over a bead formed on a depending flange formed on the vessel base. Such an arrangement is, however disadvantageous in that the heater may not be removed easily for replacement purposes, should that prove necessary during manufacture or repair. In other arrangements, the heater plate is insert moulded in the base of the vessel (GB 2310360) or a portion of the vessel base deformed over a lip of the heater plate (GB 2291325). These arrangements have the same fundamental disadvantage as referred to above. In other arrangements heaters are mounted on mounting rings which are themselves mounted to the vessel base by screws. Such arrangements are, however, relatively complicated. EP 0285839 discloses a liquid heating apparatus according to the preamble of claim 1.

The present invention seeks to provide an improved means of mounting a planar heating plate in a liquid heating apparatus and provides a liquid heating apparatus according to claim 1. The invention furthermore provides a planar heater according to claim 20.

Thus, a heater plate is mounted to a liquid heating apparatus by a bayonet fitting which also acts to maintain compression on a heater seal. This allows a heater to be rapidly mounted and, if appropriate, demounted from the apparatus and at the same time also provide for a satisfactory seal between the apparatus and the heater. The heater is clamped in position by a clamping member, preferably a clamping ring, with one part of the bayonet means being provided on the clamping member. This arrangement allows a more even clamping force to be applied to the heater.

The aperture is preferably provided in the base of the heating chamber.

The heater itself may be provided with the other part of the bayonet means. In an alternative arrangement, the other part of the bayonet means may be formed to depend from the underside of the base. In such an arrangement, a downwardly depending flange may be provided on the base around the seal receiving surface, with the bayonet means provided on that flange.

In one embodiment, the flange may be provided with a plurality of circumferentially spaced radially inwardly facing lugs under which corresponding lugs provided on the clamping member may engage.

In an alternative embodiment, a plurality of bayonet slots may be provided in the flange, into which extend corresponding lugs provided on the clamping member.

As stated above, however, bayonet means may be formed on the heater itself. In a preferred such arrangement, bayonet teeth are formed on a flange depending from a peripheral region of the heater plate. The flange may be integrally formed with the heater, but preferably it is constructed as a separate component which is then attached to the heater. The flange may, for example, be bonded to the heater plate by a suitable medium such a solder or by welding, most preferably laser welding. For ease of attachment, the flange is preferably L shaped in section, with one limb attached to the heater.

Preferably the bayonet teeth provided on the depending flange engage the clamping ring. In such a way, the heater can very effectively be clamped against a sealing surface provided on the vessel without unduly stressing the vessel material. In particular, a rim of the vessel opening and the seal may be compressed between the heater and the clamping member.

Preferably the bayonet means are arranged such that the compressive force exerted on the seal increases as the respective parts are rotated into full engagement. This may be achieved in the second arrangement described above for example by suitably inclining the lead-in to the bayonet slots.

In the preferred embodiment, means are provided to lock the bayonet means after the heater has been mounted. For example, in certain arrangements described above, a lug provided on the clamping member may be formed to extend outside the flange, and a rib formed on the outer surface of the depending flange. When the bayonet is fully engaged, the lug can be bent over behind the rib to lock the mounting.

In any event it is advantageous to provide at least one extended lug on the clamping ring so as to facilitate rotation thereof during assembly.

Preferably, the seal receiving surface is formed on the vessel body and preferably it is formed with means, such as a groove, to assist in locating the sealing means during assembly.

The invention is primarily applicable to moulded plastics vessels, but could also be applied to metal bodied vessels as well. Furthermore, the invention could be applied to mounting any planar heater in a surface (not necessarily the base) of a liquid heating apparatus, for example a shower heater. Such an apparatus may comprise the preferred features described above.

Some preferred embodiments of the present invention will now be described, by way of example only, with reference to the accompanying drawings in which:
Figure 1 is an exploded perspective view of a first embodiment of the invention;
Figure 2 is a sectional view through Figure 1;
Figure 3 is a sectional view of the assembled arrangement of Figures 1 and 2;
Figure 4 shows a further embodiment of the invention;
Figure 5 shows a detail of a part of Figure 4;
Figure 6 shows a further detail of Figure 4 but with the clamping plate engaged in the bayonet slot of the vessel body;
Figure 7 shows the arrangement of Figure 6 with the clamping plate fully positioned in the bayonet slot.
Figure 8 shows a section through a further embodiment of the invention; and
Figure 9 shows an exploded view of certain components of Figure 8.

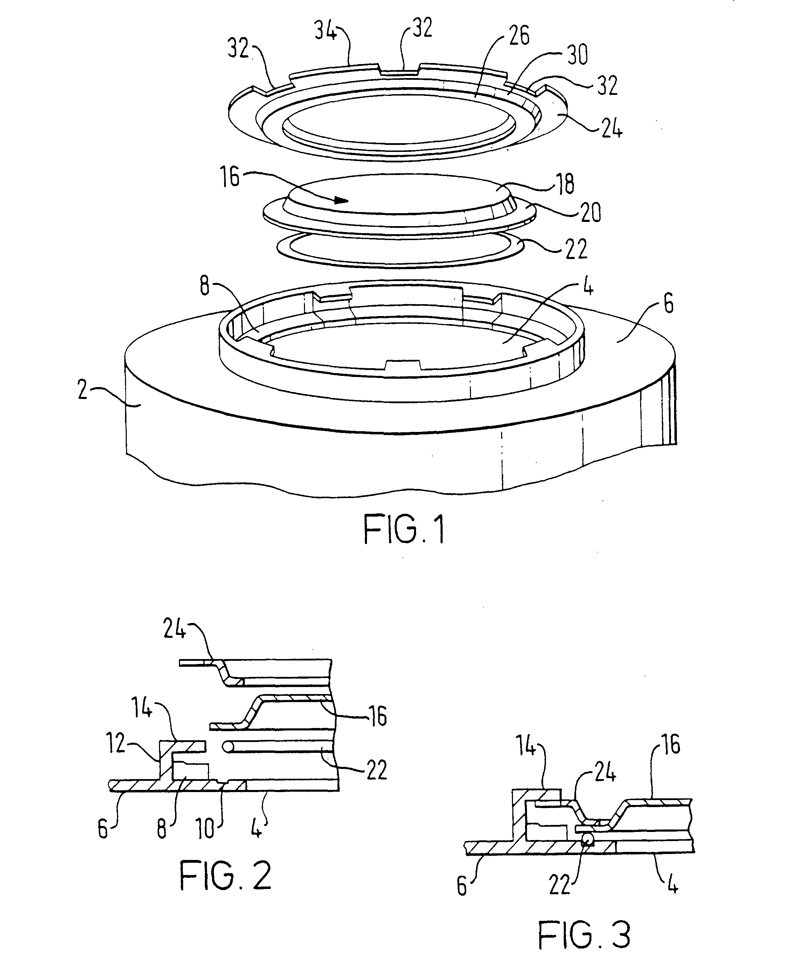

With reference to Figures 1 to 3, a liquid heating vessel has a moulded plastics body 2 of polypropylene or the like. An aperture 4 is formed in the base 6 of the vessel body 2, which is shown inverted for ease of understanding. A radially extending seal receiving surface 8 is provided on the underside of the body base 6, and is formed with a circumferentially extending seal locating groove 10. Depending downwardly (that is a downward direction in use) from the body base 6 around the seal receiving surface 8 is a flange 12. The flange 12 is provided with five circumferentially equispaced lugs 14 which, as will be described further below, constitute one part of a bayonet mounting arrangement.

A planar heater 16 comprises a dished plate 18 provided with a peripheral mounting flange 20, and arranged between the mounting flange 20 and the seal receiving surface 10 of the vessel body 2 is a circular seal 22 made, for example, from silicone rubber.

The heater 16 may be a so-called thick film heater wherein a resistive heating track is deposited on an insulating substrate applied to a plate, for example of stainless steel. Alternatively, the heater may comprise a sheathed heating element suitably attached to the underside of the heater plate 18. Both such forms of heater are well known in the art and as such need not be discussed further here.

The heater 16 is mounted to the vessel body 2 by a clamping ring 24 of, for example mild or stainless steel. The clamping ring 24 has an inner clamping surface 26 and an outer flange. These are joined by an angled wall 30. The outer flange 28 is formed with a plurality of notches 32 defining between them respective lugs 34 which constitute the other part of the bayonet mounting. The notches 32 are wider than the lugs 14 provided on the vessel body 2.

The heater 18 is assembled to the vessel as follows. Firstly, the seal 22 is interposed between the flange 20 of the heater plate 18 and the seal receiving surface of the vessel body 2. In fact, the seal 22 may be placed in the locating groove 10 provided in that surface. The clamping ring 24 is then positioned over the heater 16 with the notches 32 in the outer flange 28 thereof aligned with the lugs 14 on the vessel body 2. The clamping ring 24 is then urged towards the vessel body 2 so that the notches engage over the lugs 14, and the ring acts on the heater plate 18 so as to compress the seal 22. When the clamping ring 24 has been pushed down sufficiently so that the notches clear the lugs, it can be rotated so that the clamping ring lugs 34 engage under the vessel body lugs, thereby retaining the heater 16in position. Even after the clamping ring is released, the residual force applied is sufficient to maintain the seal 22 in compression, thereby ensuring no liquid can escape from the vessel in use.

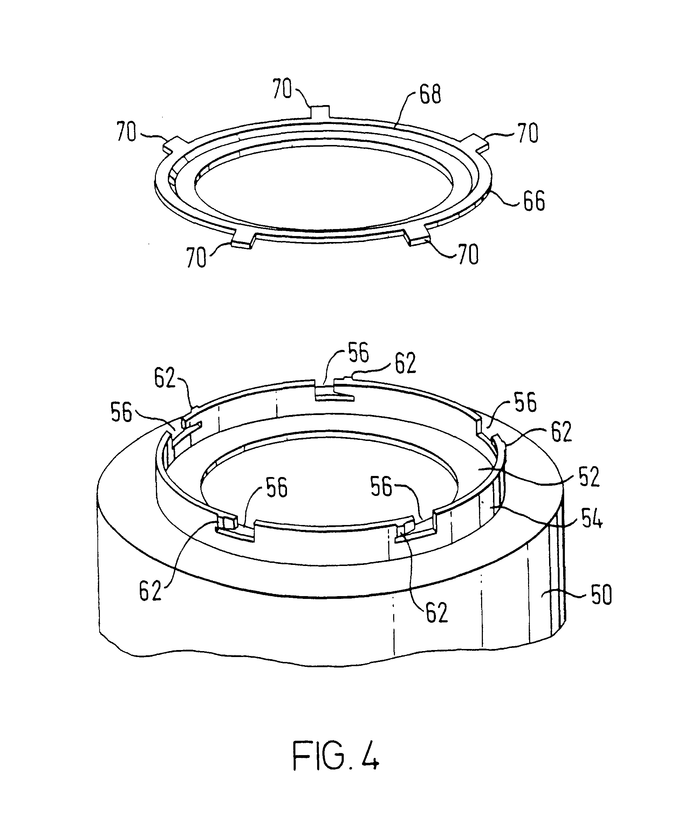

Turning now to Figures 4 to 7, a second embodiment of the invention will now be described. The seal member and heater of this embodiment are the same as those in the earlier embodiment and will not, therefore be described further. They have also been omitted from Figure 4 for clarity.

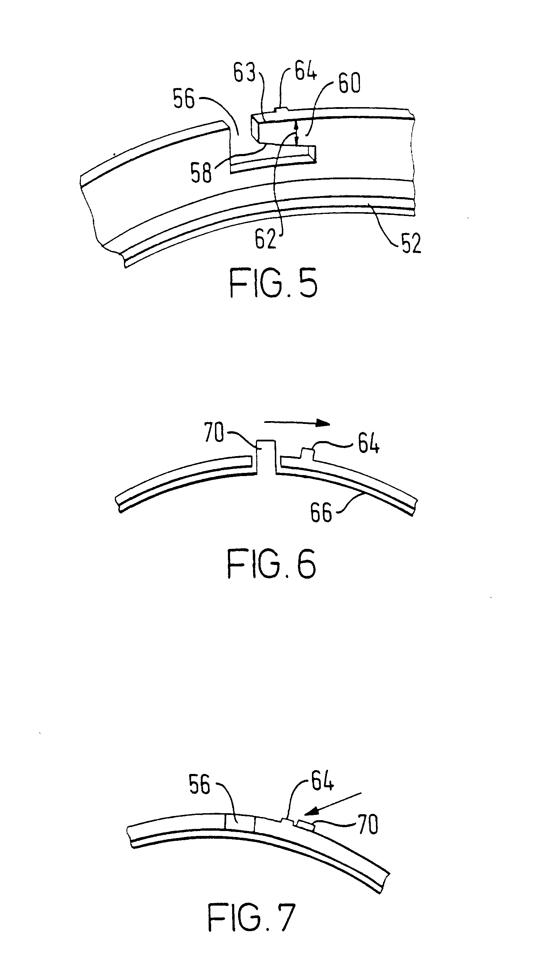

In this embodiment, the vessel body 50 is provided with a seal receiving surface 52 and depending flange 54 as in the earlier embodiment. However, the flange 54 is provided with five circumferentially equispaced generally L-shaped bayonet slots 56. As can be seen more clearly in Figure 5, the lead-in 58 to each slot tapers, while the end surface 62 is generally parallel to the vessel base. The tongue 63 created by the slot 56 should be as thick as possible to give sufficient strength. If necessary, however, strengthening fillets may be provided to strengthen the tongue 63. In addition, a rib 64 is provided down the radially outer surface of each tongue 63, for a purpose to be described further below.

The clamping ring 66 is generally of the same dished shape as that in the earlier embodiment except that its outer flange 68 is provided with five radially extending lugs 70. These are provided at the same spacing as the slots 56 and are narrower than the entry to the slots 56 to engage therein.

To assemble the heater to the vessel body, the seal and heater are positioned as before, and the clamping ring engaged over the heater. The lugs 70 are positioned in the openings to the slots 56 in the vessel body flange 54 and the clamping ring 66 then urged towards the vessel body to compress the seal.

As can be seen from Figure 6, at least one lug 70 on the clamping ring 66 is dimensioned to extend well through the slot 56 so as to enable it to be used to rotate the clamping ring 66. As the clamping ring 66 rotates, the lugs 70 are cammed towards the vessel body by the tapered lead-ins 58, thereby increasing compression on the seal. When fully in position in the slot 56, the lugs engage the flat section 62 of the slot 56, and the lug 70 can be bent over behind the rib 62 to lock the clamping ring 66 in place.

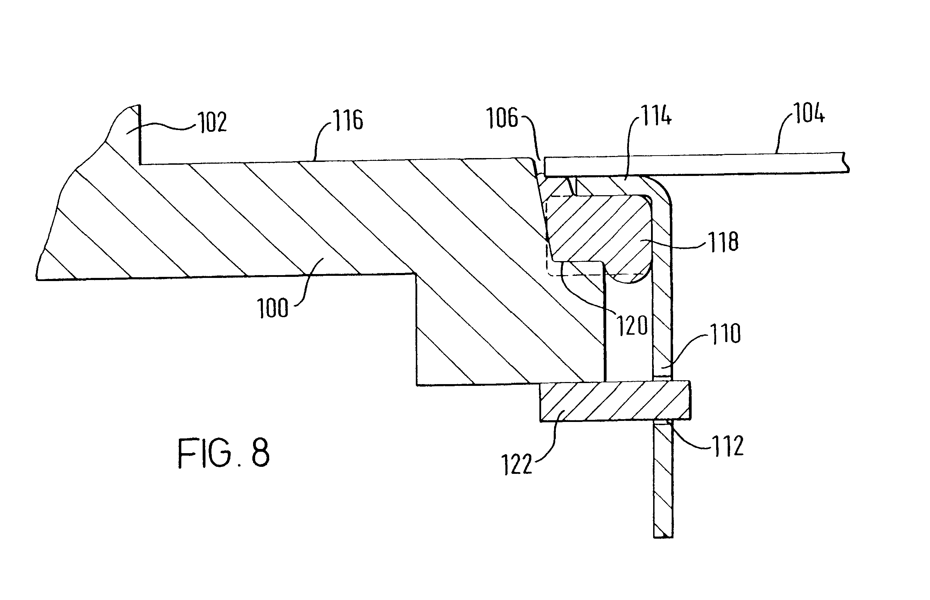

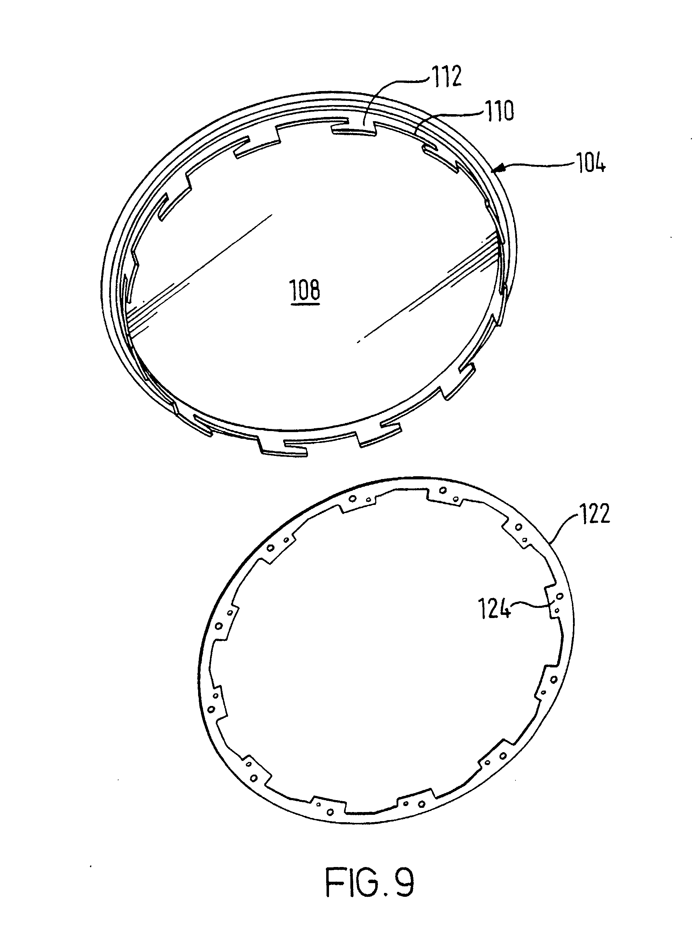

With reference to Figures 8 and 9, a further embodiment of the invention will now be described.

Figure 8 shows a detailed sectional view of the edge 100 of a liquid heating vessel 102 to which a planar heater 104 is mounted. The edge 100 is an inner edge of the base of a plastics, glass or metal vessel defining a circular (or other shaped) hole 106 which receives the heater 104.

As can be seen most clearly from Figure 9, the heater 104 comprises a plate 108 to which is attached a depending L-shaped section flange 110 having bayonet formations 112 in its'distal end. The flange 110 in this embodiment is bonded, eg soldered or welded, more especially laser welded, to the plate 108 by its upper limb 114 although in certain embodiments it may be formed integrally with the plate.

The edge 100 is stepped as shown so that the heater 104 fits flush with the upper surface 116 of the base of the liquid heating vessel. A sealing member 118, in the form of a ring of rubber or suitable elastomer is located between the heater 104 and the stepped portion 120 of the edge 100.

A clamping ring 122 having complementary bayonet features 124 to the bayonet teeth 112 on the retaining flange 110 is fitted onto the flange 110, and is assisted in this by tapered lead in to the bayonet teeth 112.

As can be seen, the sealing member 118 is compressed both horizontally and axially (vertically) between the heater retaining flange 110 and the edge 100 to form a reliable seal at that point. The axial compressive sealing forces are exerted mainly against the limb 114 of the flange 110 and the retaining ring 122, such that very little stress is put on the edge of the heater 104 itself, thereby protecting the bond between the flange 110 and the heater plate 108.

Various modifications may be made to the particular embodiments described above without departing from the scope of the invention. For example, the heater need not be dished as shown in certain embodiments but flat as shown in others. The term planar is thus intended to cover both such arrangements, and indeed any arrangement having a planar portion. The invention is also equally applicable to thick film and sheathed element type heaters. It will also be appreciated that the heater may be provided with thermally sensitive control means. For example it may a have a thermally sensitive control unit, for example one of the Applicant's U18 or U28 controls (not shown) mounted to it in any suitable manner. Furthermore, the aperture formed in the vessel base may occupy only a portion of the base, or substantially the whole base as appropriate.

## Claims

1. A liquid heating apparatus comprising a heating chamber having an aperture (4; 106) provided in a wall thereof, a planar heater (16; 104) mounted to close the aperture, a seal receiving surface (8; 120) provided around said aperture, and seal means (22; 118) arranged between the seal receiving surface and the heater, said heater being secured to said apparatus by bayonet means, which bayonet means act also to maintain compression on the seal means, **characterized in that** the apparatus comprises a separate clamping member (24; 112) for clamping the heater in position, said clamping member being provided with one part (34; 70; 124) of said bayonet means.

2. A liquid heating apparatus as claimed in claim 1 wherein said aperture (4; 106) is provided in the base (6; 100) of said chamber.

3. A liquid heating apparatus as claimed in claim 2 wherein the other part (14; 56) of the bayonet means is formed to depend from the underside of the base (6).

4. A liquid heating apparatus as claimed in claim 3 wherein said other part is provided on a downwardly depending flange (12; 54) arranged around the aperture (4).

5. A liquid heating apparatus as claimed in claim 4 wherein the flange (12) is provided with a plurality of circumferentially spaced radially inwardly facing lugs (14) under which corresponding lugs of the bayonet part (34) of said clamping member (24) engage.

6. A liquid heating apparatus as claimed in claim 4 wherein a plurality of bayonet slots (56) is provided in the flange (54), into which extend corresponding lugs (70) provided on the bayonet part of said clamping member (66).

7. A liquid heating apparatus as claimed in claims 1 or 2 wherein the heater (104) is provided with the other part (112) of the bayonet means.

8. A liquid heating apparatus as claimed in claim 7 wherein said bayonet means are provided on a flange (110) depending from a peripheral region of the heater.

9. A liquid heating apparatus as claimed in claim 8 wherein the flange (110) is constructed as a separate component which is attached to the heater.

10. A liquid heating apparatus as claimed claim 9 wherein the flange is bonded, e.g. welded, to the heater.

11. A liquid heating apparatus as claimed in any of claims 8 to 10 wherein the flange is L-shaped in section, with one limb (114) attached to the heater.

12. A liquid heating apparatus as claimed in any of claims 8 to 11 wherein said bayonet means comprises a plurality of teeth (112) depending from the flange.

13. A liquid heating apparatus as claimed in any preceding claim wherein said clamping member is a clamping ring (66; 122).

14. A liquid heating apparatus as claimed in claims 12 and 13 wherein said clamping ring has a plurality of inwardly projecting teeth (124) which engage with the downwardly depending teeth (112) of the flange.

15. A liquid heating apparatus as claimed in any of claims 7 to 14 wherein a rim (100) of the opening (106) and the seal (118) are compressed between the heater (108) and the clamping member (122).

16. A liquid heating apparatus as claimed in any preceding claim wherein the bayonet means are configured such that the compressive force exerted on the seal (22; 118) increases as the respective parts are rotated into full engagement.

17. A liquid heating apparatus as claimed in any preceding claim wherein the lead-in (58) to a part (60; 112) of the bayonet means is inclined.

18. A liquid heating apparatus as claimed in any preceding claim wherein means are provided to lock the bayonet means after the heater has been mounted in position.

19. A liquid heating apparatus as claimed in any preceding claim wherein the appliance comprises a moulded plastics body (2).

20. A planar heater (104) having a flange (110) depending from a peripheral region thereof; the flange being provided with a plurality of bayonet teeth (112), which depend vertically with respect to the planar heater, adapted to engage the corresponding bayonet part of a clamping member for securing the heater in position in a liquid heating apparatus.

## Patentansprüche

1. Flüssigkeitsheizvorrichtung umfassend eine Heizkammer mit einer in einer ihrer Wände vorgesehenen Öffnung (4; 106), ein in der Nähe der Öffnung angebrachtes planares Heizelement (16; 104), eine um die Öffnung herum vorgesehene Dichtungsaufnahmefläche (8; 120) und ein Dichtungsmittel (22; 118), das zwischen der Dichtungsaufnahmefläche und dem Heizelement angeordnet ist, wobei das Heizelement durch Bajonettmittel an der Vorrichtung befestigt ist, wobei die Bajonettmittel auch bewirken, dass ein Zusammendrücken des Dichtungsmittels aufrecht erhalten wird, **dadurch gekennzeichnet, dass** die Vorrichtung ein separates Klemmelement (24; 112) zum Festklemmen des Heizelements in seiner Position umfasst, wobei das Klemmelement mit einem Teil (34; 70; 124) der Bajonettmittel versehen ist.

2. Flüssigkeitsheizvorrichtung nach Anspruch 1, wobei die Öffnung (4; 106) in der Basis (6; 100) der Kammer vorgesehen ist.

3. Flüssigkeitsheizvorrichtung nach Anspruch 2, wobei der andere Teil (14; 56) der Bajonettmittel derart ausgebildet ist, dass er von der Unterseite der Basis (6) herabhängt.

4. Flüssigkeitsheizvorrichtung nach Anspruch 3, wobei der andere Teil an einem nach unten herabhängenden Flansch (12; 54) vorgesehen ist, der um die Öffnung (4) herum angeordnet ist.

5. Flüssigkeitsheizvorrichtung nach Anspruch 4, wobei der Flansch (12) mit einer Mehrzahl von in Umfangsrichtung im Abstand angeordneten, radial nach innen gewandten Ansätzen (14) versehen ist, unter denen entsprechende Ansätze des Bajonettteils (34) des Klemmelements (24) eingreifen.

6. Flüssigkeitsheizvorrichtung nach Anspruch 4, wobei eine Mehrzahl von Bajonettschlitzen (56) in dem Flansch (54) vorgesehen ist, in die sich entsprechende Ansätze (70) erstrecken, die an dem Bajonettteil des Klemmelements (66) vorgesehen sind.

7. Flüssigkeitsheizvorrichtung nach Anspruch 1 oder 2, wobei das Heizelement (104) mit dem anderen Teil (112) der Bajonettmittel versehen ist.

8. Flüssigkeitsheizvorrichtung nach Anspruch 7, wobei die Bajonettmittel an einem Flansch vorgesehen sind, der von einem Umfangsbereich des Heizelements herabhängt.

9. Flüssigkeitsheizvorrichtung nach Anspruch 8, wobei der Flansch (110) als ein separates Bauteil konstruiert ist, das an dem Heizelement angebracht ist.

10. Flüssigkeitsheizvorrichtung nach Anspruch 9, wobei der Flansch mit dem Heizelement verbunden ist, z. B. verschweißt ist.

11. Flüssigkeitsheizvorrichtung nach einem der Ansprüche 8 bis 10, wobei der Flansch im Schnitt L-förmig ist, wobei ein Schenkel (114) an dem Heizelement angebracht ist.

12. Flüssigkeitsheizvorrichtung nach einem der Ansprüche 8 bis 11, wobei das Bajonettmittel eine Mehrzahl von Zähnen (112) umfasst, die von dem Flansch herabhängen.

13. Flüssigkeitsheizvorrichtung nach einem der vorangehenden Ansprüche, wobei das Klemmelement ein Klemmring (66; 122) ist.

14. Flüssigkeitsheizvorrichtung nach Anspruch 12 und 13, wobei der Klemmring eine Mehrzahl von nach innen vorstehenden Zähnen (124) besitzt, die mit den nach unten herabhängenden Zähnen (112) des Flanschs ineinandergreifen.

15. Flüssigkeitsheizvorrichtung nach einem der Ansprüche 7 bis 14, wobei ein Rand (100) der Öffnung (106) und die Dichtung (118) zwischen dem Heizelement (108) und dem Klemmelement (122) zusammengedrückt werden.

16. Flüssigkeitsheizvorrichtung nach einem der vorangehenden Ansprüche, wobei die Bajonettmittel derart konfiguriert sind, dass die auf die Dichtung (22; 118) ausgeübte Zusammendrückkraft ansteigt, wenn die jeweiligen Teile in vollständigen Eingriff verdreht werden.

17. Flüssigkeitsheizvorrichtung nach einem der vorangehenden Ansprüche, wobei die Einführung (58) zu einem Teil (60; 112) der Bajonettmittel geneigt ist.

18. Flüssigkeitsheizvorrichtung nach einem der vorangehenden Ansprüche, wobei Mittel vorgesehen sind, um die Bajonettmittel zu verriegeln, nachdem das Heizelement an seiner Position angebracht ist.

19. Flüssigkeitsheizvorrichtung nach einem der vorangehenden Ansprüche, wobei das Gerät einen geformten Kunststoffkörper (2) umfasst.

20. Planares Heizelement (104) mit einem von einem seiner Umfangsbereiche herabhängenden Flansch (110), wobei der Flansch mit einer Mehrzahl von Bajonettzähnen (112) versehen ist, die bezüglich des planaren Heizelements vertikal herabhängen und die dafür ausgebildet sind, mit dem entsprechenden Bajonettteil eines Klemmelements ineinanderzugreifen, um das Heizelement in einer Flüssigkeitsheizvorrichtung an seiner Position zu befestigen.

## Revendications

1. Appareil de chauffage de liquide comprenant une chambre de chauffage possédant une ouverture (4 ; 106) disposée dans une paroi de celle-ci, un dispositif chauffant plan (16 ; 104) monté de manière à fermer l'ouverture, une surface destinée à recevoir une garniture d'étanchéité (8 ; 120) qui est disposée autour de ladite ouverture, et un moyen de fermeture étanche (22 ; 118) disposé entre la surface destinée à recevoir une garniture d'étanchéité et le dispositif chauffant, ledit dispositif chauffant étant fixé audit appareil par des moyens à baïonnette, moyens à baïonnette qui servent également à maintenir comprimé le moyen de fermeture étanche, **caractérisé en ce que** l'appareil comprend un élément de blocage séparé (24 ; 112) destiné à bloquer en position le dispositif chauffant, ledit élément de blocage étant muni d'une partie (34 ; 70 ; 124) desdits moyens à baïonnette.

2. Appareil de chauffage de liquide selon la revendication 1, dans lequel ladite ouverture (4 ; 106) est disposée à la base (6 ; 100) de ladite chambre.

3. Appareil de chauffage de liquide selon la revendication 2, dans lequel l'autre partie (14 ; 56) des moyens à baïonnette est constituée comme provenant du dessous de la base (6).

4. Appareil de chauffage de liquide selon la revendication 3, dans lequel ladite autre partie est disposée sur une bride descendante (12 ; 54) placée autour de l'ouverture (4).

5. Appareil de chauffage de liquide selon la revendication 4, dans lequel la bride (12) est munie d'une pluralité de talons saillants (14) orientés radialement vers l'intérieur et espacés circonférentiellement, sous lesquels les talons saillants correspondants (34) de la partie de baïonnette dudit élément de blocage (24) s'engagent.

6. Appareil de chauffage de liquide selon la revendication 4, dans lequel une pluralité d'encoches à baïonnette (56) sont disposées dans la bride (54) et dans lesquelles s'engagent les talons saillants (70) correspondants qui sont disposés sur la partie de baïonnette dudit élément de blocage (66).

7. Appareil de chauffage de liquide selon la revendication 1 ou 2, dans lequel le dispositif chauffant (104) est muni de l'autre partie (112) des moyens à baïonnette.

8. Appareil de chauffage de liquide selon la revendication 7, dans lequel lesdits moyens à baïonnette sont disposés sur une bride (110) qui provient d'une région périphérique du dispositif chauffant.

9. Appareil de chauffage de liquide selon la revendication 8, dans lequel la bride (110) est construite comme un composant séparé qui est fixé au dispositif chauffant.

10. Appareil de chauffage de liquide selon la revendication 9, dans lequel la bride est liée, par exemple par soudage, au dispositif chauffant.

11. Appareil de chauffage de liquide selon l'une quelconque des revendications 8 à 10, dans lequel la bride a une section en forme de L, dont une branche (114) est fixée au dispositif chauffant.

12. Appareil de chauffage de liquide selon l'une quelconque des revendications 8 à 11, dans lequel lesdits moyens à baïonnette comprennent une pluralité de dents (112) qui proviennent de la bride.

13. Appareil de chauffage de liquide selon l'une quelconque des revendications précédentes, dans lequel ledit élément de blocage est un anneau de serrage (66 ; 122).

14. Appareil de chauffage de liquide selon les revendications 12 et 13, dans lequel ledit anneau de serrage possède une pluralité de dents faisant saillie intérieurement (124) qui s'engagent avec les dents descendantes (112) qui proviennent de la bride.

15. Appareil de chauffage de liquide selon l'une quelconque des revendications 7 à 14, dans lequel un rebord (100) de l'ouverture (106) et la garniture d'étanchéité (118) sont comprimés entre le dispositif chauffant (108) et l'élément de blocage (122).

16. Appareil de chauffage de liquide selon l'une quelconque des revendications précédentes, dans lequel les moyens à baïonnette sont configurés de façon à ce que la force de compression s'exerçant sur la garniture d'étanchéité (22 ; 118) augmente lorsqu'on fait tourner les parties respectives pour les engager complètement.

17. Appareil de chauffage de liquide selon l'une quelconque des revendications précédentes, dans lequel l'ouverture (58) vers une partie (60 ; 112) des moyens à baïonnette est inclinée.

18. Appareil de chauffage de liquide selon l'une quelconque des revendications précédentes, dans lequel des moyens sont fournis pour bloquer les moyens à baïonnette après que le dispositif chauffant a été monté et mis en position.

19. Appareil de chauffage de liquide selon l'une quelconque des revendications précédentes, dans lequel l'équipement est composé d'un corps (2) en plastique moulé.

20. Dispositif chauffant plan (104) possédant une bride qui provient d'une région périphérique de celui-ci ; la bride étant munie d'une pluralité de dents à baïonnette qui sont disposées verticalement par rapport au dispositif chauffant plan, et qui sont prévues pour engager la partie à baïonnette correspondante d'un élément de blocage destiné à serrer le dispositif chauffant pour le bloquer en position dans un appareil de chauffage de liquide.
